# EUROPEAN PATENT APPLICATION

(11) **EP 3 396 431 A1**
(43) Date of publication of application: **31.10.2018**
(21) Application number: 16869376.0
(22) Date of filing: 13.10.2016
(51) Int. Cl.: G02B 21/36, G02B 21/02, G02B 15/00, G02B 21/26, G02B 21/06

(54) **MONOCULAR MICROSCOPE FOR CAPTURING STEREOSCOPIC IMAGE**

(30) Priority: 24.12.2015 KR 20150186866
(71) Applicant: Yeon Systems Co., Ltd., Gwangjin-gu, Seoul 05029 (KR)
(72) Inventor: PYO, Do-Yeon, Goyang-si Gyeonggi-do 10298 (KR)
(74) Representative: Gulde & Partner
(86) International application number: PCT/KR2016/011506
(87) International publication number: WO 2017/111274

(57) **Abstract**

Disclosed is a monocular microscope for producing a 3D image of a target having fine size. The monocular microscope includes a first imaging lens assembly (10); a half mirror (H) reflecting some of beams passing through the first imaging lens assembly (10), and transmitting remaining thereof; a first camera (30) including a third imaging lens assembly (31) forming an image by using the beams reflected by the half mirror (H); and a second camera (40) including an additional third imaging lens assembly (41) forming an image by using the beams transmitted through the half mirror (H). The monocular microscope can produce the 3D image of the target that is very close to the monocular microscope.

## Description

### Technical Field

The present application claims priority to Korean Patent Application No. 10-2015-0186866, filed December 24, 2015, the entire contents of which is incorporated herein for all purposes by this reference.

The present invention relates generally to a monocular microscope for producing a 3D image and, more particularly, to a monocular microscope for producing a 3D image of a target having a fine size.

### Background Art

Generally, a microscope is an instrument used to magnify and observe tiny objects or microorganisms that are difficult to see with the naked eye. Nowadays, most conventional microscopes produce and display a 2D image of a target in real time.

However, in order to analyze a 3D structure of a detailed target, a microscope for producing a 3D image is required. In recent years, studies on a microscope magnifying and displaying a 3D image of a target have been in progress, thanks to the development of a 3D camera producing a 3D image.

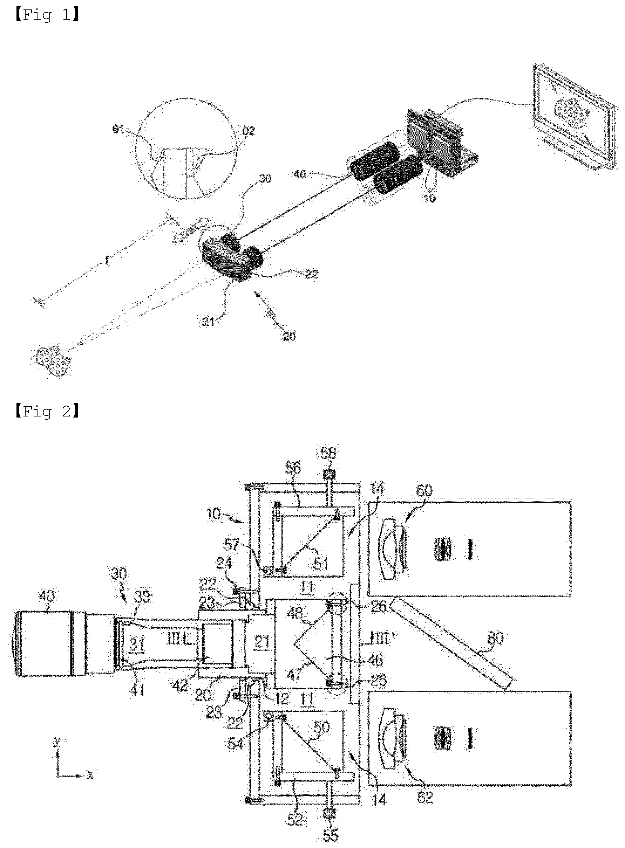

Korean Patent No. 10-1476820 describes a conventional microscope producing and displaying an enlarged 3D image of a target. Referring to FIG. 1, the conventional microscope includes an achromatic prism 20 receiving incident beams from the target, and includes a pair of zoom lenses 30 adjusting magnification of the 3D image produced by the achromatic prism 20. The zoom lenses 30 are provided at a rear surface of the achromatic prism 20.

The achromatic prism 20 includes a first prism 21 having an angled structure protruding from the center thereof, and includes a second prism 22 having an angled concave structure at the center thereof. The achromatic prism 20 respectively transmits left-eye and right-eye images to a pair of image sensors 10. That is, the conventional microscope disclosed in Korean Patent No. 10-1476820 adjusts magnification with the zoom lenses, but easily adjusts a convergence angle and the magnification by using the achromatic prism.

The conventional microscope disclosed in Korean Patent No. 10-1476820 easily can adjust the convergence angle and the magnification. However, as a microscope, when viewing a target that is very close, it is limited to secure the convergence angle due to two binocular lenses.

Specifically, the 3D camera provided in the microscope simultaneously captures left-eye and right-eye images of a target by using two cameras. A conventional 3D camera includes left-eye and right-eye cameras respectively capturing the left-eye and right-eye images, and further includes a 3D camera rig on which the left-eye and right-eye cameras are mounted.

The 3D camera rig is classified according to a parallel method (horizontal method) and an orthogonal method. A 3D camera rig using the parallel method mounts the left-eye and right-eye cameras parallel to each other. The left-eye and right-eye cameras are located to face the target, and are spaced apart from each other. The left-eye and right-eye cameras respectively receive beams reflected by the target. Therefore, 3D effect is expressed by the difference (hereinafter, denoted as binocular disparity) between the images respectively captured by the left-eye and right-eye cameras.

That is, in order to produce a 3D image by photographing a target with two cameras, it is required that minimum distances between the target and lenses of the two cameras are maintained due to a distance between the lenses of the two cameras. The minimum distance between the target and the lens is 30 or more times larger than a distance between the centers of the lenses of the two cameras. However, when a distance from the target to an objective lens is far, microscope magnification is limited. Therefore, typically, the microscope is not used for photographing a target that is far from the microscope. However, when the target is very close to lenses, it is impossible to produce a 3D image without a convergence angle. Even though a 3D image is produced, an observer may suffer from eye fatigue due to excessively expressed 3D effect of the 3D image.

Accordingly, use of a 3D camera, whereby the 3D image is formed combining the left-eye and right-eye images respectively captured by using two lenses, for a microscope is limited. The present applicant has upgraded the 3D camera using two lenses, and has proposed a monocular camera for producing a 3D image disclosed in Korean Patent No. 10-1255803. The monocular camera proposed by the present applicant can produce a clear 3D image by using one main lens (monocular lens).

Referring to FIG. 2, the conventional monocular camera for producing a 3D image described in Korean Patent No. 10-1255803 produces the 3D image by redirecting with a reflector 46, beams separately to a left-eye camera 60 and a right-eye camera 62, the beams obtained by one first imaging lens assembly 40. That is, the conventional monocular camera for producing a 3D image uses one main lens (first imaging lens assembly).

However, in order to apply the conventional monocular camera for producing a 3D image to the microscope, the following technologies are required.
(1) A technology for close-up work, and (2) a technology for adjusting an angle of view based on magnification and de-magnification of the 3D image to produce a close-up 3D image, and (3) a technology for easily replacing and changing the first imaging lens assembly based on a position and characteristics of the target.

### Documents of Related Art

Korean Patent No. 10-1476820 (3D video microscope).
Korean Patent No. 10-1255803 (monocular camera for producing 3D image).

### Disclosure

### Technical Problem

Accordingly, the present invention has been made keeping in mind the above problems occurring in the related art, and the present invention is intended to propose a monocular microscope for producing a 3D image of a target that is very close to a lens.

In addition, the present invention is intended to propose a monocular microscope for adjusting an angle of view based on magnification and de-magnification of an image of the target, the monocular microscope having a first imaging lens assembly easily replaced and changed.

### Technical Solution

In order to achieve the above object, according to one aspect of the present invention, there is provided a monocular microscope including: a first imaging lens assembly 10; a half mirror H reflecting some of beams passing through the first imaging lens assembly 10, and transmitting remaining thereof; second imaging lens assemblies 20, 21, and 22 combined with the third imaging lens assemblies 31 and 41, and adjusting focal points of the third imaging lens assemblies to be close to the respective third imaging lens assemblies, and magnifying a virtual image formed behind the first imaging lens assembly 10, and reducing chromatic aberration or field curvature aberration, etc.; a first camera 30 including a third imaging lens assembly 31 forming an image by using the beams reflected by the half mirror H; and a second camera 40 including an additional third imaging lens assembly 41 forming an image by using the beams transmitted through the half mirror H. The third imaging lens assemblies 31 and 41 may be arranged to be spaced apart from each other at a right angle. In addition, the third imaging lens assemblies 31 and 41 may be freely arranged to be spaced apart from each other at an acute angle, which is less than 90 degrees, or at an obtuse angle, which exceeds 90 degrees.

The second imaging lens assemblies may be provided between the first imaging lens assembly 10 and the half mirror H, or between the half mirror H and the third imaging lens assemblies 31 and 41.

When the third imaging lens assemblies 31 and 41 are macro lenses for close-up work, the second imaging lens assembly may be provided as an option. That is, when the third imaging lens assemblies 31 and 41 are macro lenses magnifying the virtual image formed behind the first imaging lens assembly enough to prevent vignetting, the second imaging lens assembly may be excluded from the monocular microscope.

When the third imaging lens assemblies 31 and 41 are telephoto lenses, the third imaging lens assemblies 31 and 41 may serve as macro lenses by combining the third imaging lens assemblies 31 and 41 with the second imaging lens assembly, thereby magnifying and producing an image passing through the first imaging lens assembly. Here, the magnification may be determined based on the size of the virtual image formed behind the first imaging lens assembly 10, and on the size of image planes 36 and 46 respectively provided in the cameras 30 and 40, and on an entire length (entire length of optical path from first imaging lens assembly to image plane) of the system.

According to another aspect, there is provided a monocular microscope including: a first imaging lens assembly 10; a half mirror H reflecting some of beams passing through the first imaging lens assembly 10, and transmitting remaining thereof; a reflector reflecting at least one of the beams reflected by the half mirror H and the beams transmitted through the half mirror H, to make the reflected beams and the transmitted beams parallel to each other; a third imaging lens assembly 341 forming an image by using the beams reflected by the half mirror H; an additional third imaging lens assembly 331 forming an image by using the beams transmitted through the half mirror H, and provided to be parallel with the third imaging lens assembly 341; and a second imaging lens assembly magnifying and producing an image formed behind the first imaging lens assembly 10 by magnifying an image passing through the first imaging lens assembly 10 and by adjusting focal points of the third imaging lens assemblies to be close to the respective third imaging lens assemblies.

The second imaging lens assembly may be provided between the first imaging lens assembly 10 and the half mirror H, or between the half mirror H and the third imaging lens assemblies 331 and 341.

When the third imaging lens assemblies 331 and 341 are macro lenses for close-up work, the second imaging lens assembly may be included in or excluded from the monocular microscope.

When the third imaging lens assemblies 331 and 341 are telephoto lenses, the third imaging lens assemblies 331 and 341 may serve as macro lenses by combining the third imaging lens assemblies 331 and 341 with the second imaging lens assembly, thereby magnifying and producing an image passing through the first imaging lens assembly.

In addition, the monocular microscope may use the monocular horizontal rig such that the beams reflected by the half mirror H are parallel to the beams transmitted through the half mirror H. However, the monocular microscope of the present invention may change the optical axes to be not parallel to each other by adjusting angles of the half mirror H and the reflectors. Consequently, it is possible to freely arrange the second imaging lens assemblies 21 and 22 to be not parallel to each other, as well as the third imaging lens assemblies 331 and 341 to be not parallel to each other.

In addition, the third imaging lens assemblies 331 and 341 may be provided in a single camera body 350, or in respective camera bodies.

### Advantageous Effects

The monocular microscope can realize various effects as follows.

First, the monocular microscope can produce a 3D image of a target that is very close to the first imaging lens assembly.

Second, the monocular microscope can adjust the angle of view based on the magnification and de-magnification of an image of the target that is very close to the first imaging lens assembly.

Third, the monocular microscope can provide a plurality of the first imaging lens assemblies that can be replaced and combined with the barrel such that it is easy to change and select the first imaging lens assemblies.

### Description of Drawings

FIG. 1 is a view showing the internal structure of a conventional microscope for producing a 3D image, and FIG. 2 is a view showing the internal structure of a conventional monocular camera for producing a 3D image.
FIG. 3 is a view showing the internal structure of optical components of a monocular microscope according to a first exemplary embodiment of the present invention.
FIGS. 4 to 6 are views for explaining the role of a second imaging lens assembly of the monocular microscope of the present invention.
FIG. 7 is a view showing the internal structure of optical components of a monocular microscope according to a second exemplary embodiment of the present invention.
FIG. 8 is a view showing the internal structure of optical components of a monocular microscope according to a third exemplary embodiment of the present invention.
FIG. 9 is a view showing the internal structure of optical components of a monocular microscope according to a fourth exemplary embodiment of the present invention.
FIG. 10 is a cross-sectional view of a monocular microscope holding the optical components of FIG. 3, according to a fifth exemplary embodiment of the present invention.
FIG. 11 is a cross-sectional view of a monocular microscope holding the optical components of FIG. 7, according to a sixth embodiment of the present invention.

### DESCRIPTION OF MAIN REFERENCE NUMERALS OF DRAWINGS

10, 50, 60: First imaging lens assembly
20, 21, 22: Second imaging lens assembly
30: First camera
40: Second camera
31, 41: Third imaging lens assembly
35, 45: Camera body
70: Guide
100, 200, 300, 400, 500, 600: Monocular microscope
510, 610: Barrel
520, 620: Support arm
530, 630: Stage
H: Half mirror

### Mode for Invention

Hereinbelow, exemplary embodiments of the present invention will be described in detail with reference to the accompanying drawings. Prior to the description, the terms and words used in the present specification and claims should not be interpreted as being limited to typical meanings or dictionary definitions, but should be interpreted as having meanings and concepts relevant to the technical scope of the present invention based on the rule according to which an inventor can appropriately define the concept of the term to describe most appropriately the best method he or she knows for carrying out the invention. Specific structural and functional descriptions of embodiments of the present invention disclosed herein are only for illustrative purposes of the exemplary embodiments of the present invention, and the present description is not intended to represent all of the technical spirit of the present invention. On the contrary, the present invention is intended to cover not only the exemplary embodiments, but also various alternatives, modifications, equivalents and other embodiments that may be included within the spirit and scope of the present invention as defined by the appended claims.

According to the present invention, in order to produce a close-up 3D image, a monocular microscope includes a first imaging lens assembly 10, a half mirror H, a first camera 30, and a second camera 40. After describing a structure of optical components provided at the inside of the monocular microscope, a mechanical configuration of the monocular microscope will be described.

Hereinafter, 'an imaging lens assembly' denotes an assembly combined with one or two or more lenses.

### (1) First exemplary embodiment

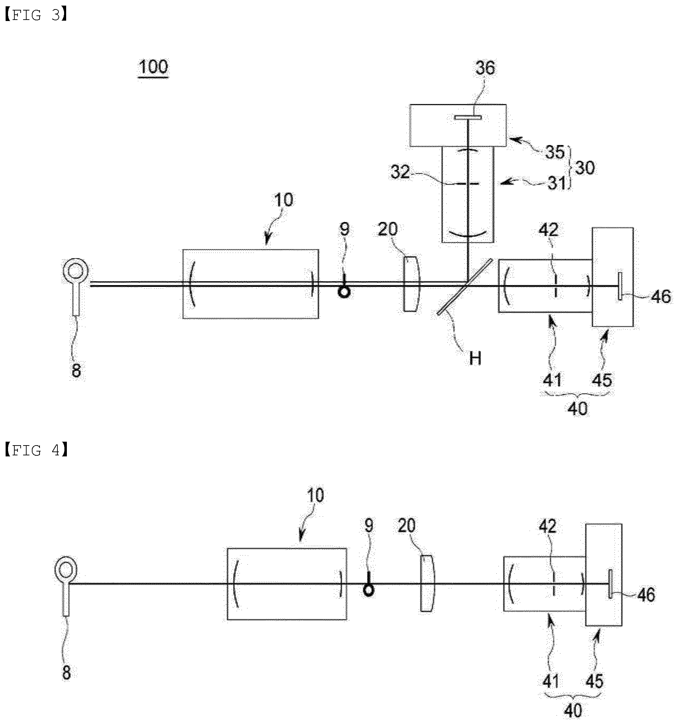

FIG. 3 is a view showing the internal structure of optical components of a monocular microscope according to a first exemplary embodiment of the present invention.

Referring to FIG. 3, the monocular microscope 100 uses a monocular orthogonal rig. Therefore, the first camera 30 and the second camera 40 may be arranged to be spaced apart from each other at a right angle. Here, the right angle, without being limited to 90 degrees, includes a range of about 90 degrees.

Specifically, the monocular microscope 100 includes a first imaging lens assembly 10, a second imaging lens assembly 20 provided behind the first imaging lens assembly 10, a half mirror H, a first camera 30 provided on an optical axis reflected by the half mirror H, and a second camera 40 provided on an optical axis transmitted through the half mirror H.

Incident beams from a target 8 converge in the first imaging lens assembly 10. The first imaging lens assembly 10 may be replaced with a suitable lens based on the purpose of use, the type of the target, a distance from the target to the first imaging lens assembly 10, etc. In addition, the first imaging lens assembly 10 includes a zoom lens adjusting magnification.

The monocular microscope 100 may further include a second imaging lens assembly 20. The second imaging lens assembly 20 adjusts focal points to be close to the respective third imaging lens assemblies by combining with third imaging lens assemblies 31 and 41, and reduces both chromatic aberration and field curvature aberration. In addition, the second imaging lens assembly 20 is provided to move forward and backward on an optical axis between the half mirror H and the first imaging lens assembly 10. Therefore, when producing a 3D image, the second imaging lens assembly 20 can assist the first imaging lens assembly 10 to focus on a target located beyond a focus range of the first imaging lens assembly 10. When a main target is located slightly beyond the focus range of the first imaging lens assembly 10, the main target can be focused by moving the second imaging lens assembly 20 toward the third imaging lens assemblies 31 and 41. When the main target is located far beyond the focus range of the first imaging lens assembly 10, the main target can be focused by moving the second imaging lens assembly 20 toward the first imaging lens assembly 10.

The second imaging lens assembly 20 enables the monocular microscope 100 to produce a 3D image of the target that is very close to the first imaging lens assembly 10. In addition, the second imaging lens assembly 20 enables the first imaging lens assembly 10 to precisely adjust an angle of view based on magnification and de-magnification of an image of the target regardless of the focus range. Here, when the distance between the target and the first imaging lens assembly 10 is less than 1 m, the target is very close to the first imaging lens assembly 10. Even if the distance is less than 10 cm, the monocular microscope 100 can produce a clear 3D image.

The first camera 30 includes a third imaging lens assembly 31 and a camera body 35. In addition, the second camera 40 includes an additional third imaging lens assembly 41 and an additional camera body 45. The camera bodies 35 and 45 respectively include image planes 36 and 46 therein.

The third imaging lens assembly 31 forms an image by using the beams reflected by the half mirror H, and the additional third imaging lens assembly 41 forms an image by using the beams transmitted through the half mirror H.

The third imaging lens assemblies 31 and 41 serve as base lenses, and macro lenses may be used as the third imaging lens assemblies 31 and 41 for close-up work. In addition, when using the macro lenses as the third imaging lens assemblies 31 and 41 and enough magnification is obtained, the second imaging lens assembly 20 may be excluded from the monocular microscope. When using the macro lenses as the third imaging lens assemblies 31 and 41, the monocular microscope can produce a 3D image of the organs, etc. that are very close to the first imaging lens assembly 10. Furthermore, the monocular microscope can precisely adjust the angle of view based on the magnification and de-magnification of an image of the target that is located beyond the focus range of the first imaging lens assembly 10.

When using telephoto lenses as the third imaging lens assemblies 31 and 41, the third imaging lens assemblies 31 and 41 serve as macro lenses by being combined with the second imaging lens assembly 20. With the combination, the monocular microscope can magnify and de-magnify an image of the detailed target, and enhances clarity of the 3D image by securing the convergence angle.

In order to use various lenses as a first imaging lens assembly 10, it is desirable that a virtual image formed behind the first imaging lens assembly 10 is magnified by using the second imaging lens assembly 20 and the third imaging lens assemblies 31 and 41.

To this end, when having a difficulty in adjusting both a distance between the third imaging lens assembly 31 and an image plane 36, and another distance between the additional third imaging lens assembly 41 and an additional image plane 46, the telephoto lenses are used as the third imaging lens assemblies 31 and 41. In addition, the third imaging lens assemblies 31 and 41 are combined with the second imaging lens assembly 20 for close-up work. Therefore, it is possible to magnify the image formed by the first imaging lens assembly 10. Alternatively, in order to adjust a focal point to be close to the respective third imaging lens assemblies, the macro lenses (close-up work lens) are used as the third imaging lens assemblies 31 and 41, and additionally the second imaging lens assembly 20 is used. In addition, the second imaging lens assembly 20 reduces both chromatic aberration and field curvature aberration. Therefore, it is finally possible to magnify the virtual image formed behind the first imaging lens assembly 10 and produce the virtual image.

Particularly, when the sizes of the image planes 36 and 46 are larger than the size of a virtual image 9 of a first focal plane formed by the first imaging lens assembly 10, the macro lenses are used as the third imaging lens assemblies 31 and 41 for close-up work. Therefore, it is possible to reduce vignetting. In addition, it is possible to provide a wide range of choices for the first imaging lens assembly 10.

Moreover, in comparison with using telephoto lenses as the third imaging lens assemblies 31 and 41, when using the macro lenses for close-up work as the third imaging lens assemblies 31 and 41, the distance between the first imaging lens assembly 10 and the imaging planes 36 and 46 is shorter, thereby reducing the size of the monocular microscope.

In the meantime, in order to reduce the size of the monocular microscope, the second imaging lens assembly 20 may use a high magnification lens (lens having a short focal length). However, a high-definition image having low distortion can be produced by using a close-up work lens as the third imaging lens assemblies 31 and 41, rather than using the high magnification lens as the second imaging lens assembly 20.

In the meantime, the monocular microscope may further include apertures 32 and 42.

The apertures 32 and 42 may be respectively provided in the third imaging lens assemblies 31 and 41, without being provided in the first imaging lens assembly 10. Even though a lens having an aperture is used as the first imaging lens assembly 10, the aperture of the first imaging lens assembly 10 should stay open during photographing. The apertures 32 and 42 of the third imaging lens assemblies 31 and 41 prevent vignetting.

In the meantime, as described above, when using the macro lenses as the third imaging lens assemblies 31 and 41 and thus providing enough magnification, the second imaging lens assembly 20 may be excluded from the monocular microscope. When using the telephoto lenses as the third imaging lens assemblies 31 and 41, the third imaging lens assemblies 31 and 41 serve as the macro lenses by being combined with the second imaging lens assembly 20. In association with the above, the role of the second imaging lens assembly 20 will be described with reference to FIGS. 4 to 6.

FIGS. 4 to 6 are views showing the internal structure of the monocular microscope for explaining in detail the difference between using the monocular microscope with the second imaging lens assembly 20 and without, when the half mirror H and the first camera 30 are absent.

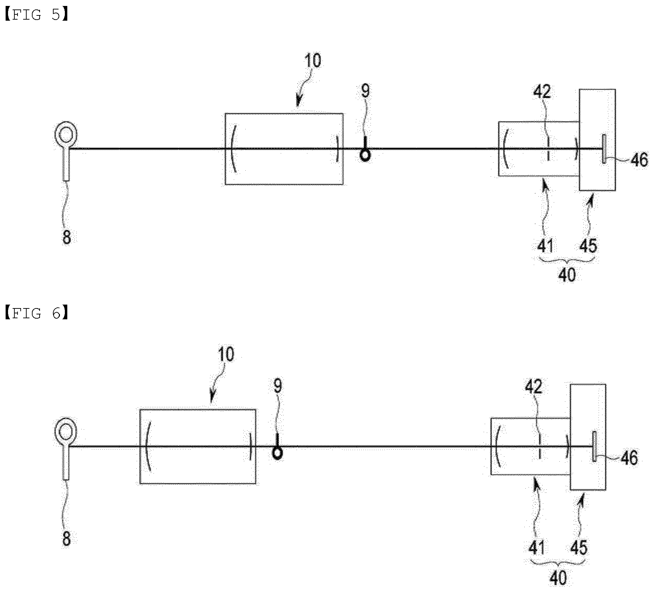

FIG. 4 is a view showing the case with the second imaging lens assembly 20. FIG. 5 is a view showing the case without the second imaging lens assembly 20. The second imaging lens assembly 20 adjusts the focal point of the additional third imaging lens assembly 41 forward. Namely, the second imaging lens assembly 20 moves the focal point of the additional third imaging lens assembly 41 rightward in the drawing. Therefore, it is possible to reduce the length (length from first imaging lens assembly 10 to additional image plane 46) of the entire system (move the location of the first imaging lens assembly rightward in the drawing).

In other words, the focal point of the additional third imaging lens assembly 41 should be located at the position of the virtual image 9 of the first imaging lens assembly 10. Therefore, the close-up work lens (for example, macro lens) is used as the additional third imaging lens assembly 41. Alternatively, when a normal telephoto lens (lens having typical focal point control value) is used as the additional third imaging lens assembly 41, the second imaging lens assembly 20 is also used, thereby adjusting the focal point of the additional third imaging lens assembly 41 forward.

In the case of FIG. 4, a normal image is formed. However, in the case of FIG. 5, an abnormal image is formed because the focal point of the additional third imaging lens assembly 41 is not located at the position of the virtual image 9 of the first imaging lens assembly 10. In this case, as shown in FIG. 6, the first imaging lens assembly 10 is required to be located farther from the additional third imaging lens assembly 41. When the first imaging lens assembly 10 is located farther from the additional third imaging lens assembly 41, vignetting, which is a darkening at the periphery of an image caused by a reduced brightness around a camera lens, occurs.

### (2) Second exemplary embodiment

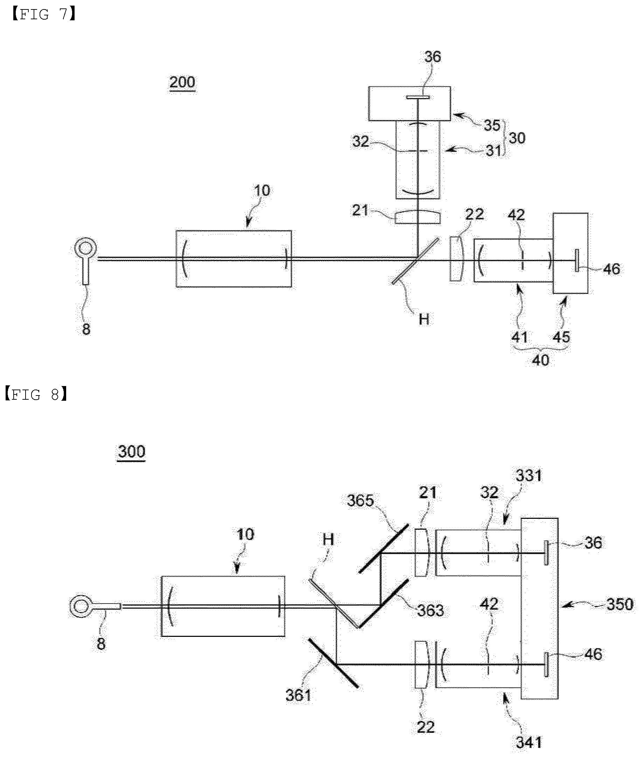

FIG. 7 is a view showing the internal structure of optical components of a monocular microscope according to the second exemplary embodiment of the present invention.

Hereinafter, the same names are used throughout the monocular microscopes of the first and second exemplary embodiments to refer to the same components. Therefore, all same names have the same meanings, except for relationships between the components.

Referring to FIG. 7, a monocular microscope 200 uses a monocular orthogonal rig. Therefore, the first camera 30 and the second camera 40 may be arranged to be spaced apart from each other at a right angle. In addition, the first camera 30 and the second camera 40 may be freely arranged to be spaced apart from each other at an acute angle, which is less than 90 degrees, or at an obtuse angle, which exceeds 90 degrees.

Specifically, the monocular microscope 200 includes a first imaging lens assembly 10, second imaging lens assemblies 21 and 22 provided behind the first imaging lens assembly 10, a half mirror H, the first camera 30 provided on the optical axis reflected by the half mirror H, and the second camera 40 provided on the optical axis transmitted through the half mirror H.

In description of the difference between the monocular microscope 100 of the first exemplary embodiment and the monocular microscope 200 of the second exemplary embodiment, the second imaging lens assemblies 21 and 22 are respectively provided between the half mirror H and the third imaging lens assemblies 31 and 41. Therefore, in the monocular microscope 200 of the second exemplary embodiment, the beams reflected by the half mirror H are incident to the third imaging lens assembly 31 via the second imaging lens assembly 21. In addition, the beams transmitted through the half mirror H are incident to the additional third imaging lens assembly 41 via the second imaging lens assembly 22.

In the meantime, according to the second exemplary embodiment of the present invention, the macro lenses or the telephoto lenses may be used as the third imaging lens assemblies 31 and 41. In addition, when the macro lenses are used as the third imaging lens assemblies 31 and 41, the second imaging lens assemblies 21 and 22 may be excluded from the monocular microscope. When the telephoto lenses are used as the third imaging lens assemblies 31 and 41, the focal points can be adjusted to be close to the respective third imaging lens assemblies by combining the third imaging lens assemblies 31 and 41 with the second imaging lens assemblies 21 and 22. Such descriptions of the monocular microscope 200 of the second exemplary embodiment are the same as those of the monocular microscope 100 of the first exemplary embodiment.

However, unlike the monocular microscope 100 of the first exemplary embodiment, it is desirable that the monocular microscope 200 of the second exemplary embodiment does not use devices frequently moving the second imaging lens assemblies 21 and 22 forward and backward on respective optical axes. The reason is that the loss of time for individually adjusting the focal points is greater than the benefit of focus range extension obtained by frequently moving the second imaging lens assemblies 21 and 22.

### (3) Third exemplary embodiment

FIG. 8 is a view showing the internal structure of optical components of a monocular microscope according to the third exemplary embodiment of the present invention.

Hereinafter, the same names are used throughout the monocular microscopes of the first and third exemplary embodiments to refer to the same components. Therefore, all same names have the same meanings, except for relationships between the components.

Referring to FIG. 8, according to the third exemplary embodiment, the monocular microscope 300 uses a monocular horizontal rig. In addition, the monocular microscope 300 includes the first imaging lens assembly 10, and the half mirror H, the second imaging lens assemblies 21 and 22, reflectors 361, 363 and 365 that are provided behind the first imaging lens assembly 10.

The reflectors 361, 363 and 365 reflect at least one of the beams reflected by the half mirror H and the beams transmitted through the half mirror H, to make the reflected beams and the transmitted beams parallel to each other.

FIG. 8 shows an example of the reflectors. The reflectors 363 and 365 reflect the beams transmitted through the half mirror H toward an additional third imaging lens assembly 331. In addition, the reflector 361 reflects the beams reflected by the half mirror H toward a third imaging lens assembly 341. Here, the reflectors 361, 363 and 365 adjusting optical axes by reflecting the beams, without being limited to, may be mirrors.

According to the third exemplary embodiment, the monocular microscope 300 of FIG. 8 uses the monocular horizontal rig such that the beams reflected by the half mirror H are parallel to the beams transmitted through the half mirror H. However, the monocular microscope of the present invention can change the optical axes to be not parallel to each other by adjusting angles of the half mirror H and the reflectors. Consequently, it is possible to freely arrange the second imaging lens assemblies 21 and 22 to be not parallel to each other, as well as the third imaging lens assemblies 331 and 341 to be not parallel to each other.

According to the third exemplary embodiment, some of beams passing through the first imaging lens assembly 10 pass through the half mirror H, and are incident to the second imaging lens assembly 21 by being reflected by the reflectors 363 and 365. The remaining of the beams passing through the first imaging lens assembly 10 are reflected by the half mirror H and the reflector 361 in sequence, and are incident to the second imaging lens assembly 22.

The beams incident to the second imaging lens assembly 21 are incident to the additional third imaging lens assembly 331 via the second imaging lens assembly 21. The beams incident to the second imaging lens assembly 22 are incident to the third imaging lens assembly 341 via the second imaging lens assembly 22.

In the meantime, according to the third exemplary embodiment of the present invention, the macro lenses or the telephoto lenses may be used as the third imaging lens assemblies 331 and 341. In addition, when using the macro lenses as the third imaging lens assemblies 331 and 341, the second imaging lens assemblies 21 and 22 may be excluded from the monocular microscope. When using the telephoto lenses as the third imaging lens assemblies 331 and 341, the focal points can be adjusted to be close to the respective third imaging lens assemblies by combining the third imaging lens assemblies 331 and 341 with the second imaging lens assemblies 21 and 22. Such descriptions of the monocular microscope 300 of the third exemplary embodiment are the same as those of the monocular microscope 100 of the first exemplary embodiment.

In the meantime, FIG. 8 shows the monocular microscope using an integral binocular disparity type. Alternatively, using two cameras for the monocular microscope is well known to those of ordinary skill in the art.

### (4) Fourth exemplary embodiment

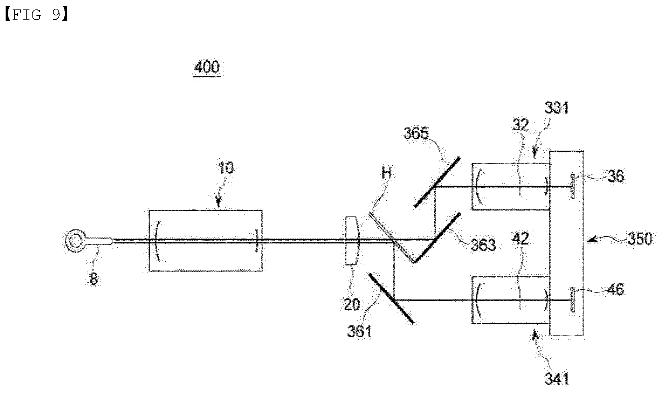

FIG. 9 is a view showing the internal structure of optical components of a monocular microscope according to the fourth exemplary embodiment of the present invention.

Hereinafter, the same names are used throughout the monocular microscopes of the third and fourth exemplary embodiments to refer to the same components. Therefore, all same names have the same meanings, except for relationships between the components.

Referring to FIG. 9, a monocular microscope 400 of the forth exemplary embodiment is the same as a monocular microscope 300 of the third exemplary embodiment, except that the second imaging lens assembly 20 is provided in front of the half mirror H. Therefore, some of beams passing through the first imaging lens assembly 10 are reflected by the half mirror H and the mirror 361 in sequence, and are incident to the third imaging lens assembly 341. The remaining of the beams passing through the first imaging lens assembly 10 pass through the half mirror H, and are reflected by the reflectors 363 and 365 in sequence, and are incident to the additional third imaging lens assembly 331.

According to the fourth exemplary embodiment, the monocular microscope 400 of FIG. 9 uses the monocular horizontal rig, such that the beams reflected by the half mirror H are parallel to the beams transmitted through the half mirror H. However, the monocular microscope of the present invention can change the optical axes to be not parallel to each other by adjusting angles of the half mirror H and the reflectors. Consequently, it is possible to freely arrange the third imaging lens assemblies 331 and 341 to be not parallel to each other.

In the meantime, according to the fourth exemplary embodiment of the present invention, the macro lenses or the telephoto lenses may be used as the third imaging lens assemblies 331 and 341. In addition, when using the macro lenses as the third imaging lens assemblies 331 and 341, the second imaging lens assembly 20 may be excluded from the monocular microscope. When using the telephoto lenses as the third imaging lens assemblies 331 and 341, the focal points can be adjusted to be close to the respective third imaging lens assemblies by combining the third imaging lens assemblies 331 and 341 with the second imaging lens assembly 20. Such descriptions of the monocular microscope 400 of the fourth exemplary embodiment are the same as those of the monocular microscope 100 of the first exemplary embodiment.

In the meantime, the monocular microscope 400 may use a binocular disparity type 3D camera (that is, integral binocular disparity type or two cameras) or a monocular horizontal rig.

### (5) Fifth exemplary embodiment

Hereinafter, a mechanical configuration of the monocular microscope holding the above-mentioned structure of the optical components, will be described in detail by describing exemplary embodiments of the present invention.

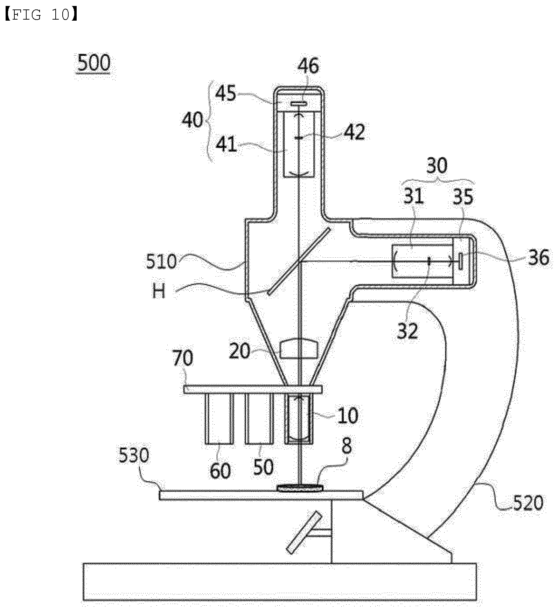

FIG. 10 is a cross-sectional view of a monocular microscope holding the optical components of FIG. 3, according to the fifth exemplary embodiment of the present invention.

Referring to FIG. 10, according to the fifth exemplary embodiment of the present invention, the monocular microscope 500 includes first imaging lens assemblies 10, 50, and 60, a barrel 510, a support arm 520, and a stage 530.

The first imaging lens assemblies 10, 50, and 60 may be a plurality of the first imaging lens assemblies that are arranged to be spaced apart from each other. The barrel 510 may hold the half mirror H, the first camera 30, and the second camera 40 therein. The barrel 510 may further hold the second imaging lens assembly 20 therein. The first imaging lens assemblies 10, 50, and 60 may be provided at a lower part of the barrel 510. Specifically, the first imaging lens assembly 10, the second imaging lens assembly 20, and the half mirror H may be arranged in sequence, along an optical axis of incident beams from the target 8.

The support arm 520 may be connected to the barrel 510 to fix the position of the barrel 510 on the ground. A specimen of the target is placed on the stage 530. The stage 530 may move in a horizontal direction, or may tilt by a method widely known in the art.

The monocular microscope may further include a guide 70. The guide 70 moves the plurality of the first imaging lens assemblies 10, 50, and 60 to alternately arrange one of the first imaging lens assemblies 10, 50, and 60 to the lower part of the barrel 510. A method of moving the first imaging lens assemblies 10, 50, and 60 by the guide 70 includes a method of rotating a revolver.

The monocular microscope may further include a lighting device (not shown) provided at an outer surface of the first imaging lens assemblies 10, 50, and 60, the lighting device emitting beams to the target. The monocular microscope may further include another lighting device provided under the stage 530, and emitting beams to the target. The lighting devices include lighting devices using a transmission method and a reflection method.

The 3D image produced by the first camera 30 and the second camera 40 that are provided in the barrel 510, may be displayed on a display (not shown).

The structure of optical components of the monocular microscope 500 of the fifth exemplary embodiment is the same as those of the monocular microscope 100 of the first exemplary embodiment.

### (6) Sixth exemplary embodiment

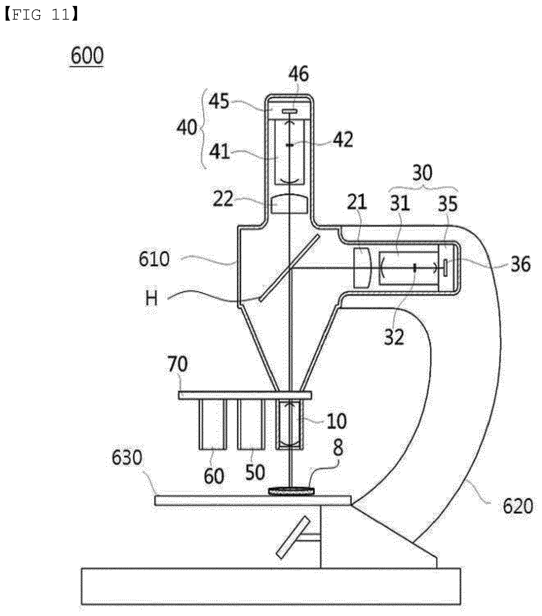

FIG. 11 is a cross-sectional view of a monocular microscope holding the optical components of FIG. 7, according to the sixth exemplary embodiment of the present invention.

Referring to FIG. 11, a monocular microscope 600 of the sixth exemplary embodiment is the same as a monocular microscope 500 of the fifth exemplary embodiment, except that the second imaging lens assemblies 21 and 22 are respectively provided between the half mirror H and the third imaging lens assemblies 31 and 41.

In addition, it is apparent that the structures of optical components of the monocular microscopes 300 and 400 of the third and fourth exemplary embodiments can be applied to those of the monocular microscopes 500 and 600 of the fifth and sixth exemplary embodiments.

As described above, the monocular microscope of the present invention (1) can produce the 3D image of the target that is very close to the first imaging lens assembly, and (2) can adjust the angle of view based on magnification and de-magnification of the 3D image of the target that is very close to the first imaging lens assembly, and (3) can provide a plurality of the first imaging lens assemblies that can be replaced and combined with the barrel such that it is easy to change and select the first imaging lens assemblies.

## Claims

1. A monocular microscope for producing a 3D image, the monocular microscope comprising:
a first imaging lens assembly (10);
a half mirror (H) reflecting some of beams passing through the first imaging lens assembly (10), and transmitting remaining thereof;
a first camera (30) or a camera body (350) including a third imaging lens assembly (31, 341) forming an image by using the beams reflected by the half mirror (H);
a second camera (40) or the camera body (350) including an additional third imaging lens assembly (41, 331) forming an image by using the beams transmitted through the half mirror (H); and
a second imaging lens assembly combined with the third imaging lens assemblies (31 and 41, 331 and 341), and adjusting focal points of the third imaging lens assemblies (31 and 41, 331 and 341) to be close to the respective third imaging lens assemblies, and reducing both chromatic aberration and field curvature aberration of a final image,
wherein the third imaging lens assemblies (31 and 41, 331 and 341) are freely arranged to be spaced apart from each other at a right angle, at an acute angle, which is less than 90 degrees, or at an obtuse angle, which exceeds 90 degrees, or to be parallel to each other, and are lenses for close-up work, and
the second imaging lens assembly is provided between the first imaging lens assembly (10) and the half mirror (H), or between the half mirror (H) and the third imaging lens assemblies (31 and 41, 331 and 341).

2. A monocular microscope for producing a 3D image, the monocular microscope comprising:
a first imaging lens assembly (10);
a half mirror (H) reflecting some of beams passing through the first imaging lens assembly (10), and transmitting remaining thereof;
a second imaging lens assembly;
a first camera (30) or a camera body (350) including a third imaging lens assembly (31, 341) forming an image by using the beams reflected by the half mirror (H); and
a second camera (40) or the camera body (350) including an additional third imaging lens assembly (41, 331) forming an image by using the beams transmitted through the half mirror (H),
wherein the second imaging lens assembly is provided between the first imaging lens assembly (10) and the half mirror (H), or between the half mirror (H) and the third imaging lens assemblies (31 and 41, 331 and 341), and is combined with the third imaging lens assemblies (31 and 41, 331 and 341), and adjusts focal points of the third imaging lens assemblies (31 and 41, 331 and 341) to be close to the respective third imaging lens assemblies, and reduces both chromatic aberration and field curvature aberration of a final image, and
the third imaging lens assemblies (31 and 41, 331 and 341) are freely arranged to be spaced apart from each other at a right angle, at an acute angle, which is less than 90 degrees, or at an obtuse angle, which exceeds 90 degrees, or to be parallel to each other, and are telephoto lenses and serve as macro lenses for close-up work by being combined with the second imaging lens assembly.

3. The monocular microscope of claim 1 or 2, wherein when the third imaging lens assemblies (331 and 341) are arranged to be spaced apart from each other at an acute angle, which is less than 90 degrees, or at an obtuse angle, which exceeds 90 degrees, or to be parallel to each other, the monocular microscope further includes a reflector reflecting at least one of the beams reflected by the half mirror (H) and the beams transmitted through the half mirror (H), to make the reflected beams and the transmitted beams spaced apart from each other at an acute angle, which is less than 90 degrees, or at an obtuse angle, which exceeds 90 degrees, or parallel to each other.

4. The monocular microscope of claim 1 or 2, wherein when the third imaging lens assemblies (331 and 341) are arranged to be spaced apart from each other at an acute angle, which is less than 90 degrees, or at an obtuse angle, which exceeds 90 degrees, or to be parallel to each other, the third imaging lens assemblies (331 and 341) are provided in a single camera body (350), or in respective camera bodies.

5. The monocular microscope of claim 1 or 2, wherein when the third imaging lens assemblies (331 and 341) are arranged to be spaced apart from each other at an acute angle, which is less than 90 degrees, or at an obtuse angle, which exceeds 90 degrees, or to be parallel to each other, the monocular microscope further includes:
at least one first imaging lens assembly (10, 50, 60);
a barrel (510) holding the half mirror (H) and the camera body (350) therein; and
a guide (70) connecting the at least one first imaging lens assembly (10, 50, 60) to a lower part of the barrel (510).

6. The monocular microscope of claim 1 or 2, wherein the first imaging lens assembly (10) includes a zoom lens that adjusts magnification.

7. The monocular microscope of claim 1 or 2, wherein when the third imaging lens assemblies (31 and 41) are arranged to be spaced apart from each other at a right angle, the monocular microscope further includes:
at least one first imaging lens assembly (10, 50, 60);
a barrel (510) holding the half mirror (H), the first camera (30), and the second camera (40) therein; and
a guide (70) connecting the at least one first imaging lens assembly (10, 50, 60) to a lower part of the barrel (510).

8. The monocular microscope of claim 1 or 2, wherein when the third imaging lens assemblies (31 and 41) are arranged to be spaced apart from each other at a right angle, the monocular microscope produces a 3D image without refracting optical paths, or without changing optical axes between the half mirror (H) and the third imaging lens assemblies (31 and 41).

9. The monocular microscope of claim 1 or 2, wherein the monocular microscope further includes a stage (530) on which a target is placed for producing a 3D image, the stage moving in a horizontal direction or tilting.

10. The monocular microscope of claim 9, wherein the monocular microscope further includes a lighting device provided under the stage (530), and emitting beams to the target.

11. The monocular microscope of claim 1 or 2, wherein the monocular microscope further includes a lighting device provided at an outer surface of the first imaging lens assembly (10, 50, 60), and emitting beams to a target.
